# EUROPEAN PATENT SPECIFICATION

(11) **EP 3 848 445 B1**
(45) Date of publication and mention of the grant of the patent: **18.10.2023**
(21) Application number: 20217616.0
(22) Date of filing: 29.12.2020
(51) Int. Cl.: C12H 1/22, C12G 1/02

(54) **MULTIPLE-CELL TANK FOR USE IN WINEMAKING**
MEHRKAMMERTANK ZUR VERWENDUNG BEI DER WEINHERSTELLUNG
RÉSERVOIR À MULTIPLES CELLULES POUR UNE UTILISATION EN VINIFICATION

(30) Priority: 08.01.2020 IT 202000000115
(43) Date of publication of application: 14.07.2021
(73) Proprietor: Defranceschi S.r.l., 40026 Imola (BO) (IT)
(72) Inventor: GUILLEMAIN, Laurent Jean Paul, 48123 RAVENNA (IT)
(74) Representative: Modiano, Micaela Nadia

(56) References cited:
- WO-A1-02/064456
- WO-A1-2010/105676
- WO-A1-2019/056767
- US-A1- 2009 255 927

## Description

The present invention relates to a multiple-cell tank for use in winemaking.

Multiple-cell tanks are known and widely used, especially for white and rosé winemaking and storage, such tanks being used when there are space problems in the wine cellar and/or when it is necessary to have a high number of reduced-capacity chambers available for winemaking and/or for storage WO2019/056767 discloses a multifunctional fruit wine brewing apparatus which comprises separate storage tanks. WO2010/105676 teaches a winemaking apparatus, WO02/064456 discloses a container for bulk storage of liquid foods and wine and US 2009/255927 discloses a container assembly for controlling the rate of oxygen transfer from the atmosphere into dry table wine stored within the container.

Conventional multiple-cell tanks have a supporting frame for a vertically-extending cylindrical container defined by a bottom wall, by a top wall and by a cylindrical lateral shell.

Along the extension of the vertical cylindrical shell, one or more horizontally-extending partitions, which are adapted to define multiple cells for winemaking and/or storage, are arranged inside the container, arranged one above the other.

Especially with reference to tanks for making white or rosé wine, each cell is fitted with a lower discharge hatch and with an upper evacuation stack.

In conventional multiple-cell tanks, the lower discharge hatches are arranged at different heights along the extension of the cylindrical shell, while the evacuation stacks of the lower cells are connected to an evacuation port defined on the cylindrical shell, just below intermediate horizontally-extending partitions.

The solutions used nowadays exhibit a number of drawbacks.

First, the fact that the discharge hatches are arranged at heights that do not permit direct access from the floor determines the need to use ladders or walkways which, in addition to being particularly inconvenient to use, have undesired encumbrances, in addition to having an impact on appearance that often clashes with the design ethos of the wine cellar overall.

The presence of stacks that protrude laterally to the cylindrical shell also impacts on the clean appearance and on the optimization of spaces.

The aim of the present invention is to provide a multiple-cell tank for use in winemaking which is capable of improving the known art in one or more of the abovementioned aspects.

Within this aim, an object of the invention is to make available a multiple-cell tank for use in winemaking that has extremely reduced transverse encumbrances.

Another object of the invention is to devise a multiple-cell tank for use in winemaking that makes it possible to easily access the discharge hatches from the floor, without the need to use ladders or walkways.

Another object of the invention is to provide a multiple-cell tank for use in winemaking that is highly reliable, easy to implement and low-cost.

This aim and these and other objects which will become more apparent hereinafter are achieved by a multiple-cell tank for use in winemaking according to claim 1, optionally provided with one or more of the characteristics of the dependent claims.

Further characteristics and advantages of the invention will become more apparent from the description of some preferred, but not exclusive, embodiments of the multiple-cell tank for use in winemaking according to the invention, which are illustrated for the purposes of non-limiting example in the accompanying drawings wherein:

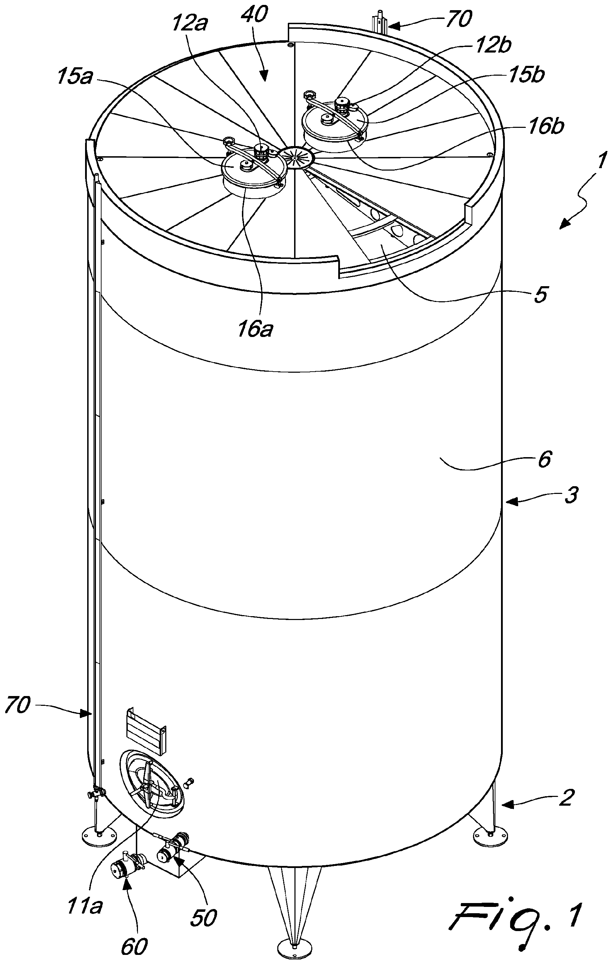

Figure 1 is a perspective view of a multiple-cell tank according to the invention;

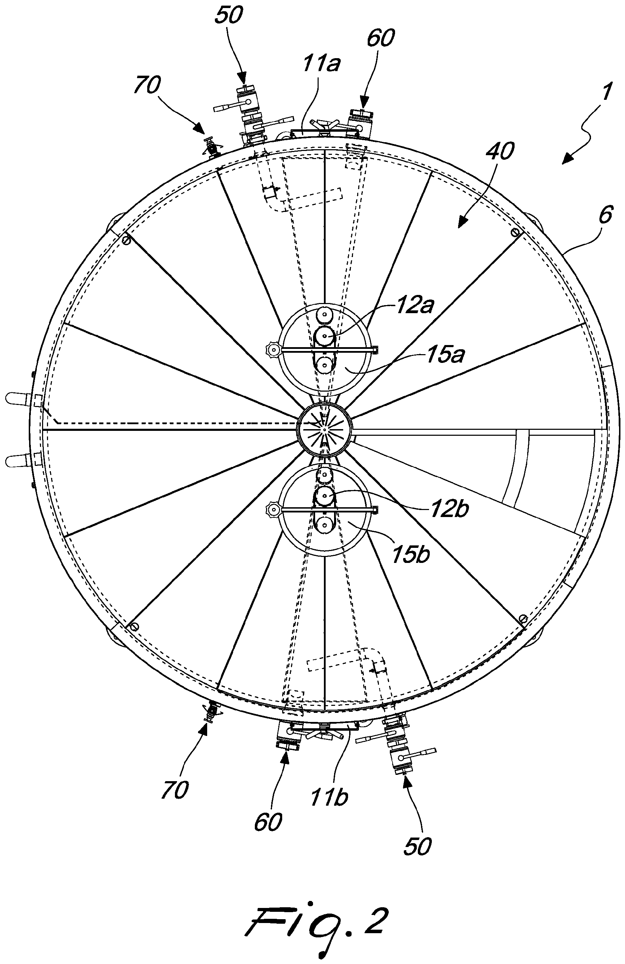

Figure 2 is a view from above of the multiple-cell tank of Figure 1;

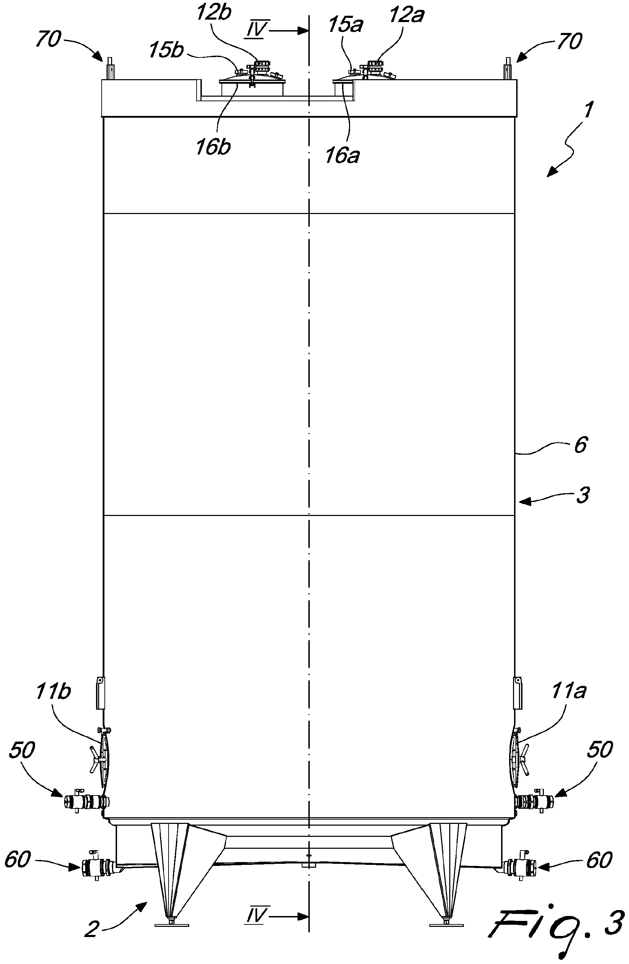

Figure 3 is a side view of the multiple-cell tank of Figure 1;

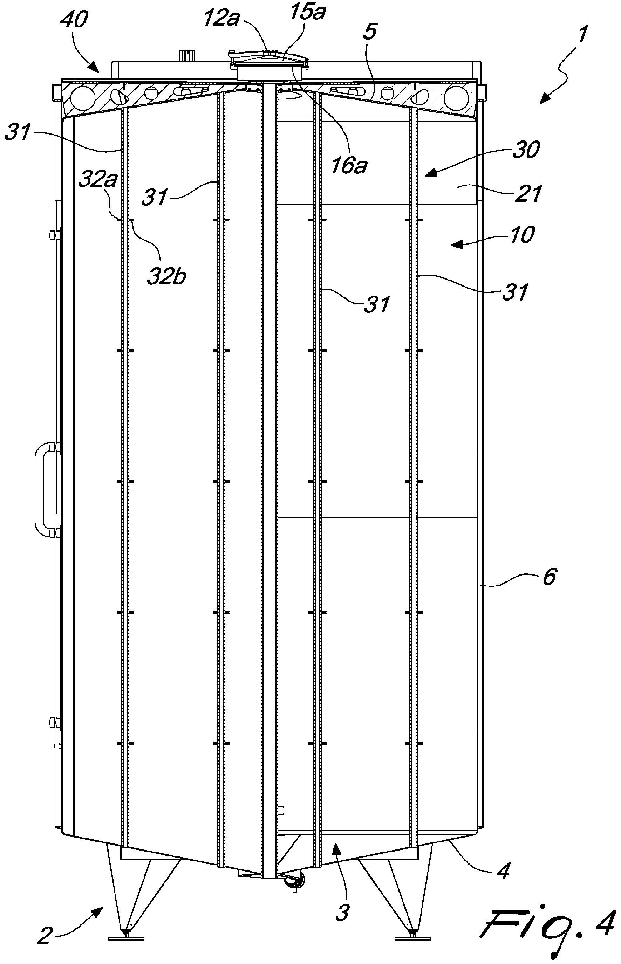

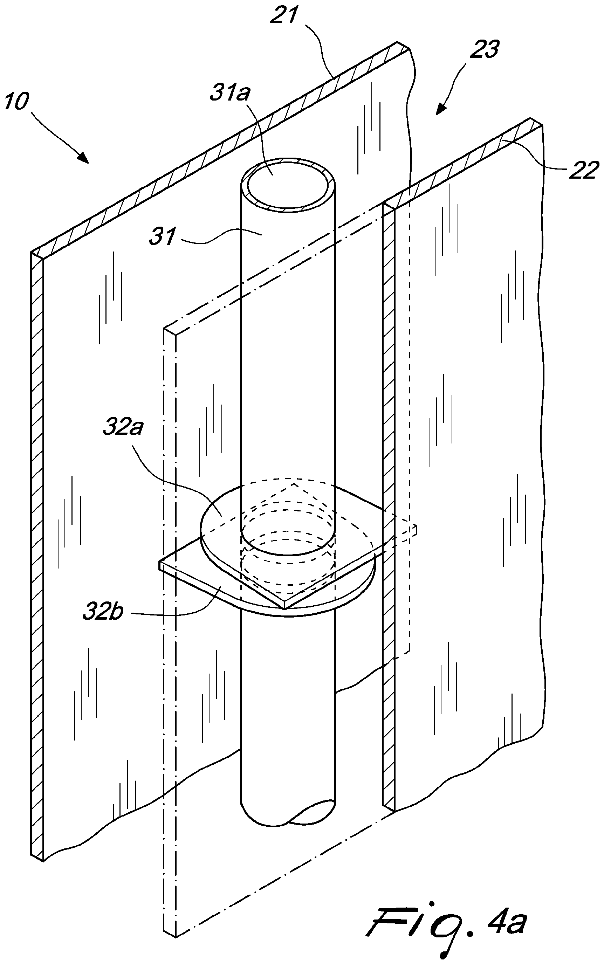

Figure 4 is a cross-sectional view of the multiple-cell tank taken along the plane of arrangement identified by the line IV-IV of Figure 3;
Figure 4a is a perspective view of an enlarged portion of the separation partition;

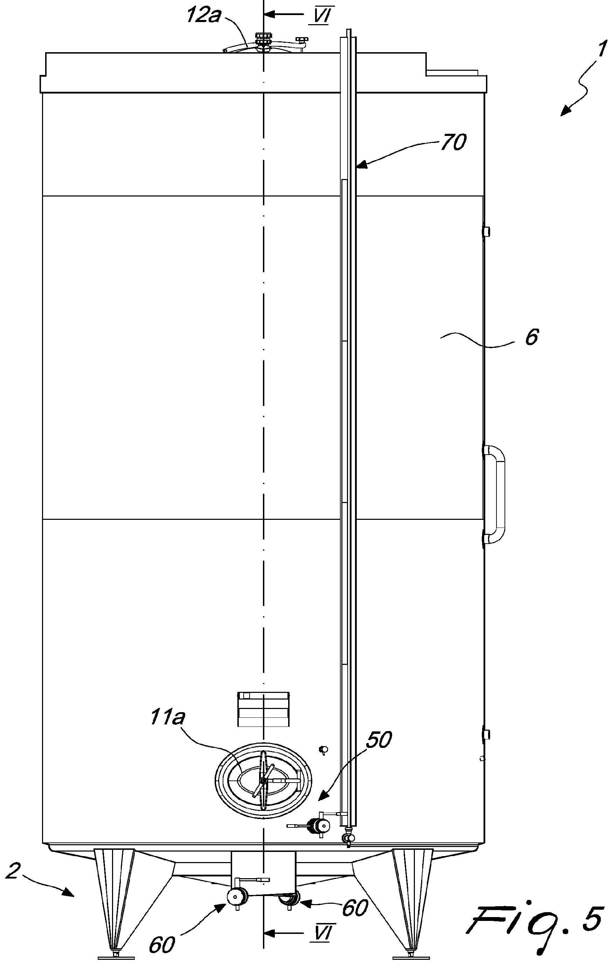

Figure 5 is a side view of the multiple-cell tank of Figure 1;

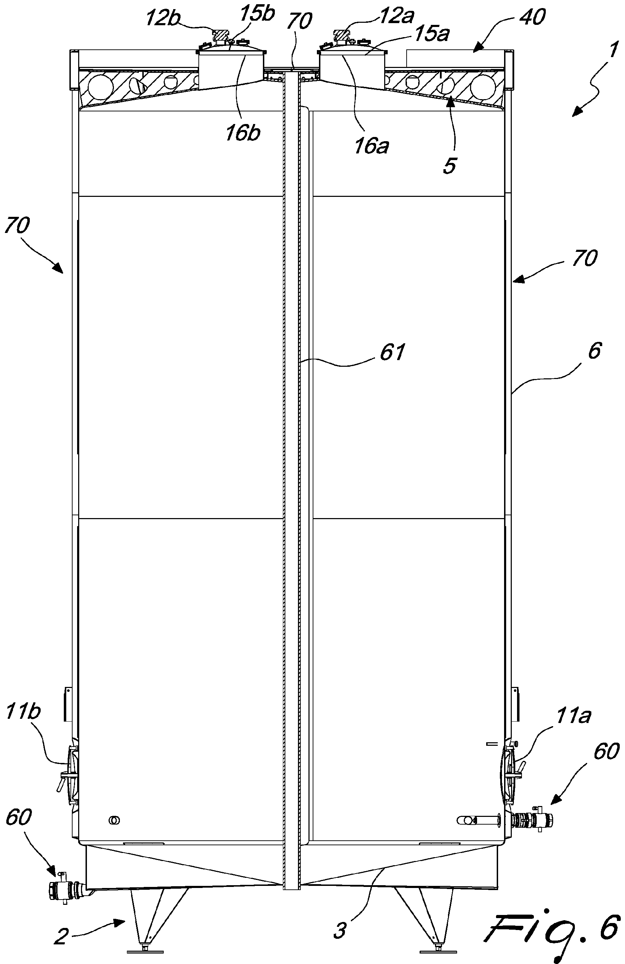

Figure 6 is a cross-sectional view of the multiple-cell tank taken along the plane of arrangement identified by the line VI-VI of Figure 5.

With reference to the figures, the multiple-cell tank for use in winemaking according to the invention, generally designated by the reference numeral 1, comprises a supporting frame 2 for a tank body 3.

The tank body 3 comprises a bottom wall 4, a top wall 5 and a lateral shell 6.

The lateral shell 6 defines a continuous lateral surface.

The tank body 3 defines, therefore, a closed internal volume.

At least two containment cells 11, 12 are defined inside the tank body 3 and are mutually hermetically separated by at least one separation partition 10.

The at least two containment cells 11, 12 are accommodated inside the closed internal volume.

According to the present invention, the (or each) separation partition 10 extends between the bottom wall 4 and the top wall 5.

Each separation partition 10 extends within the continuous lateral surface.

At the lateral shell 6 there are at least one first and at least one second access hatch 11a, 11b which lead into a respective containment cell 11, 12 and are arranged substantially at the same height with respect to the bottom wall 4.

At the top wall 5 there are furthermore at least one first and at least one second evacuation stack 12a, 12b in communication with a respective containment cell 11, 12.

According to a preferred embodiment the multiple-cell tank 1 comprises a winemaking tank for making white or rosé wine.

Conveniently, the separation partition 10 extends on a substantially vertical plane.

Conveniently, the separation partition 10 comprises first and second vertical walls 21, 22 which are mutually spaced apart so as to define a separation gap 23 between the respective containment cells 11, 12.

The first and second vertical walls 21, 22 are mutually spaced apart by a substantially constant distance along their extension.

The tank 3 can have, in some possible embodiments, a supporting structure 30 for the separation partition 10.

In particular, the supporting structure 30 comprises a plurality of vertical posts 31 which are arranged inside the separation gap 23 and are connected, via connecting brackets 32a, 32b, to the first and to the second vertical walls 21, 22.

In this manner, each one of the two vertical walls 21, 22 is supported directly by the supporting structure 30 so as to ensure the necessary rigidity even if only one of the containment cells 11, 12 is filled.

However, it has been found that it is preferable to avoid the use of supporting structures 30 arranged at the separation partition 10, so as to reduce the rigidity of the structure overall, thus enabling the vertical walls 21, 22 to adapt to the different stresses.

There can also be insulation means associated with the separation partition 10.

By way of example, the thermal insulation means can comprise an insulating material arranged inside the separation gap 23.

Conveniently, the insulating material can comprise an expanded polymeric material, for example a polyurethane foam.

Advantageously, the separation partition 10 comprises conditioning means.

In this regard it is possible to use internally hollow vertical posts 31 in order to provide respective heat exchange conduits 31.

With reference to the practical embodiment shown in the figures, the evacuation stacks 12a, 12b are supported by an upper closure hatch 15a, 15b which can be associated detachably with a coupling seat 16a, 16b supported by the top wall 5.

It is possible for the multiple-cell tank 1 to be associated with a walking surface 40 arranged above the top wall 5 and supported directly by the multiple-cell tank 1.

In this regard, the walking surface 40 can be associated with a discharge duct 6, which extends preferably at the vertical axis of the multiple-cell tank 1, and is connected to the walking surface through a drain hole 61.

In a lower region, the discharge duct is connected to one or more discharge tubes 60.

According to a preferred embodiment, each containment cell 11, 12 is associated with a level indicator 70 of the liquid inside the respective containment cell 11, 12.

Use of the multiple-cell tank 1 according to the invention is substantially similar to that of a conventional tank.

All the discharge hatches 11a, 11b are accessible from floor level without the need for ladders or walkways.

Even the evacuation stacks, being arranged at the top wall, are no hindrance, neither from the point of view of space occupation nor of the impact on appearance.

Moreover, all the details may be substituted by other, technically equivalent elements.

In practice the materials employed, provided they are compatible with the specific use, and the contingent dimensions and shapes, may be any according to requirements and to the state of the art.

## Claims

1. A multiple-cell tank (1) for use in winemaking, which comprises a supporting frame (2) for a tank body (3) which comprises a bottom wall (4), a top wall (5) and a lateral shell (6), at least two containment cells (11, 12) being defined inside said tank body (3) and being mutually hermetically separated by at least one separation partition (10), **characterized in that** said at least one separation partition (10) extends between said bottom wall (4) and said top wall (5), at said lateral shell (6) there being at least one first and at least one second access hatch (11a, 11b), which lead into a respective containment cell (11, 12), and are arranged substantially at the same height with respect to said bottom wall (4), at said top wall (5) there being at least one first and at least one second evacuation stack (12a, 12b) in communication with a respective containment cell (11, 12).

2. The multiple-cell tank (1) according to claim 1, **characterized in that** it comprises a winemaking tank for making white or rosé wine.

3. The multiple-cell tank (1) according to claim 1, **characterized in that** said separation partition (10) extends on a substantially vertical plane.

4. The multiple-cell tank (1) according to one or more of the preceding claims, **characterized in that** said separation partition (10) comprises a first and a second vertical wall (21, 22) which are mutually spaced apart so as to define a separation gap (23) between the respective containment cells (11, 12).

5. The multiple-cell tank (1) according to one or more of the preceding claims, **characterized in that** it comprises a supporting structure (30) for said separation partition (10).

6. The multiple-cell tank (1) according to one or more of the preceding claims, **characterized in that** said supporting structure (30) comprises a plurality of vertical posts (31) which are arranged inside said separation gap (23) and are connected, via connecting brackets (32a, 32b), to said first and second vertical walls (21, 22).

7. The multiple-cell tank (1) according to one or more of the preceding claims, **characterized in that** it comprises thermal insulation means associated with said separation partition (10).

8. The multiple-cell tank (1) according to one or more of the preceding claims, **characterized in that** said at least one separation partition (10) comprises conditioning means.

9. The multiple-cell tank (1) according to claim 9, **characterized in that** said conditioning means comprise exchanger means which comprise at least one heat exchange duct (31a).

10. The multiple-cell tank (1) according to one or more of the preceding claims, **characterized in that** said evacuation stacks (12a, 12b) are supported by an upper closure hatch (15a, 15b) which can be associated detachably with a coupling seat (16a, 16b) supported by said top wall (5).

## Patentansprüche

1. Ein Mehrkammertank (1) zur Verwendung bei der Weinherstellung, der einen Stützrahmen (2) für einen Tankkörper (3) umfasst, welcher eine Bodenwand (4), eine obere Wand (5) und ein seitliches Gehäuse (6) umfasst, wobei mindestens zwei Aufnahmekammern (11, 12) in dem Tankkörper (3) bestimmt und durch mindestens eine Trennwand (10) hermetisch voneinander getrennt sind; **dadurch gekennzeichnet, dass** die mindestens eine Trennwand (10) sich zwischen der Bodenwand (4) und der oberen Wand (5) erstreckt; wobei sich an dem seitlichen Gehäuse (6) mindestens eine erste und mindestens eine zweite Zugangsluke (11a, 11b) befinden, die in eine entsprechende Aufnahmekammer (11, 12) führen und im Wesentlichen auf derselben Höhe mit Bezug auf die Bodenwand (4) angeordnet sind; wobei sich an der oberen Wand (5) mindestens ein erster und mindestens ein zweiter Austrittsschacht (12a, 12b) in Kommunikation mit einer entsprechenden Aufnahmekammer (11, 12) befinden.

2. Der Mehrkammertank (1) gemäß Anspruch 1, **dadurch gekennzeichnet, dass** er einen Weinherstellungstank zur Herstellung von Weiß- oder Rosäwein umfasst.

3. Der Mehrkammertank (1) gemäß Anspruch 1, **dadurch gekennzeichnet, dass** die Trennwand (10) sich auf einer im Wesentlichen vertikalen Ebene erstreckt.

4. Der Mehrkammertank (1) gemäß einem oder mehreren der obigen Ansprüche, **dadurch gekennzeichnet, dass** die Trennwand (10) eine erste und eine zweite vertikale Wand (21, 22) umfasst, die voneinander beabstandet sind, um eine Lücke (23) zwischen den entsprechenden Aufnahmekammern (11, 12) zu bestimmen.

5. Der Mehrkammertank (1) gemäß einem oder mehreren der obigen Ansprüche, **dadurch gekennzeichnet, dass** er eine tragende Struktur (30) für die Trennwand (10) umfasst.

6. Der Mehrkammertank (1) gemäß einem oder mehreren der obigen Ansprüche, **dadurch gekennzeichnet, dass** die tragende Struktur (30) eine Vielzahl vertikaler Säulen (31) umfasst, die in der Lücke (23) angeordnet und über Verbindungsplattformen (32a, 32b) mit der ersten und der zweiten vertikalen Wand (21, 22) verbunden sind.

7. Der Mehrkammertank (1) gemäß einem oder mehreren der obigen Ansprüche, **dadurch gekennzeichnet, dass** er mit der Trennwand (10) verbundene Wärmeisoliermittel umfasst.

8. Der Mehrkammertank (1) gemäß einem oder mehreren der obigen Ansprüche, **dadurch gekennzeichnet, dass** die mindestens eine Trennwand (10) Klimatisierungsmittel umfasst.

9. Der Mehrkammertank (1) gemäß Anspruch 9, **dadurch gekennzeichnet, dass** die Klimatisierungsmittel Austauschmittel umfassen, die mindestens eine Wärmetauschleitung (31a) umfassen.

10. Der Mehrkammertank (1) gemäß einem oder mehreren der obigen Ansprüche, **dadurch gekennzeichnet, dass** die Austrittsschächte (12a, 12b) von einer oberen Verschlussluke (15a, 15b) getragen sind, die lösbar mit einem von der oberen Wand (5) getragenen Kopplungssitz (16a, 16b) gekoppelt werden kann.

## Revendications

1. Réservoir à plusieurs cellules (1) destiné à être utilisé en vinification, qui comprend un bâti de support (2) pour un corps de réservoir (3) qui comprend une paroi inférieure (4), une paroi supérieure (5) et une coque latérale (6), au moins deux cellules de confinement (11, 12) étant définies à l'intérieur dudit corps de réservoir (3) et étant séparées mutuellement hermétiquement par au moins une cloison de séparation (10), **caractérisé en ce que** ladite au moins une cloison de séparation (10) s'étend entre ladite paroi inférieure (4) et ladite paroi supérieure (5), au niveau de ladite coque latérale (6), il y a au moins une première et au moins une seconde trappe d'accès (11a, 11b) qui mènent à une cellule de confinement (11, 12) respective, et sont agencées sensiblement à la même hauteur par rapport à ladite paroi inférieure (4), au niveau de ladite paroi supérieure (5), il y a au moins une première et au moins une seconde cheminée d'évacuation (12a, 12b) en communication avec une cellule de confinement (11, 12) respective.

2. Réservoir à plusieurs cellules (1) selon la revendication 1, **caractérisé en ce qu'**il comprend un réservoir de vinification pour fabriquer du vin blanc ou rosé.

3. Réservoir à plusieurs cellules (1) selon la revendication 1, **caractérisé en ce que** ladite cloison de séparation (10) s'étend sur un plan sensiblement vertical.

4. Réservoir à plusieurs cellules (1) selon une ou plusieurs des revendications précédentes, **caractérisé en ce que** ladite cloison de séparation (10) comprend une première et une seconde paroi verticale (21, 22) qui sont mutuellement espacées afin de définir un espace de séparation (23) entre les cellules de confinement (11, 12) respectives.

5. Réservoir à plusieurs cellules (1) selon une ou plusieurs des revendications précédentes, **caractérisé en ce qu'**il comprend une structure de support (30) pour ladite cloison de séparation (10).

6. Réservoir à plusieurs cellules (1) selon une ou plusieurs des revendications précédentes, dans lequel ladite structure de support (30) comprend une pluralité de montants verticaux (31) qui sont agencés à l'intérieur dudit espace de séparation (23) et sont raccordés, via des supports de raccordement (32a, 32b), auxdites première et seconde parois verticales (21, 22).

7. Réservoir à plusieurs cellules (1) selon une ou plusieurs des revendications précédentes, **caractérisé en ce qu'**il comprend des moyens d'isolation thermique associés à ladite cloison de séparation (10).

8. Réservoir à plusieurs cellules (1) selon une ou plusieurs des revendications précédentes, **caractérisé en ce que** ladite au moins une cloison de séparation (10) comprend des moyens de conditionnement.

9. Réservoir à plusieurs cellules (1) selon la revendication 9, **caractérisé en ce que** lesdits moyens de conditionnement comprennent des moyens échangeurs qui comprennent au moins un conduit d'échange de chaleur (31a).

10. Réservoir à plusieurs cellules (1) selon une ou plusieurs des revendications précédentes, **caractérisé en ce que** lesdites cheminées d'évacuation (12a, 12b) sont supportées par une trappe de fermeture supérieure (15a, 15b) qui peut être associée de manière détachable à un siège de couplage (16a, 16b) supporté par ladite paroi supérieure (5).
